# EUROPEAN PATENT APPLICATION

(11) **EP 2 833 272 A1**
(43) Date of publication of application: **04.02.2015**
(21) Application number: 13290174.5
(22) Date of filing: 29.07.2013
(51) Int. Cl.: G06F 17/30

(54) **Processing information queries in a distributed information processing environment**

(71) Applicant: Amadeus S.A.S., 06410 Biot (FR)
(72) Inventor: Francois, Pierrick, 06600 Antibes (FR); Bonaud, Jacques, 06800 Cagnes-sur-mer (FR)
(74) Representative: Samson & Partner

(57) **Abstract**

A distributed information processing environment includes enquiring entities, content provider platforms and a query processing server with a cache storing query response data received in response to information queries from the content provider platforms. The query processing server receives an information query and directs it to a content provider platform. If the content provider platform responds within a given time limit, the query processing server forwards the response to the enquiring entity and updates respective information query response data in the cache. If the content provider platform does not respond within the given time limit, the query processing server forwards a cache-based response to the enquiring entity. If the content provider platform still responds at a later point of time after the given time limit has exceeded, the query processing server updates the respective cached information query response data according to the later response of the content provider platform.

## Description

### FIELD OF THE INVENTION

The present invention generally relates to a method and a server for handling information queries in a distributed information processing environment. More specifically, it is directed to a mechanism for dealing with delayed answers to information queries directed to content provider platforms.

### BACKGROUND

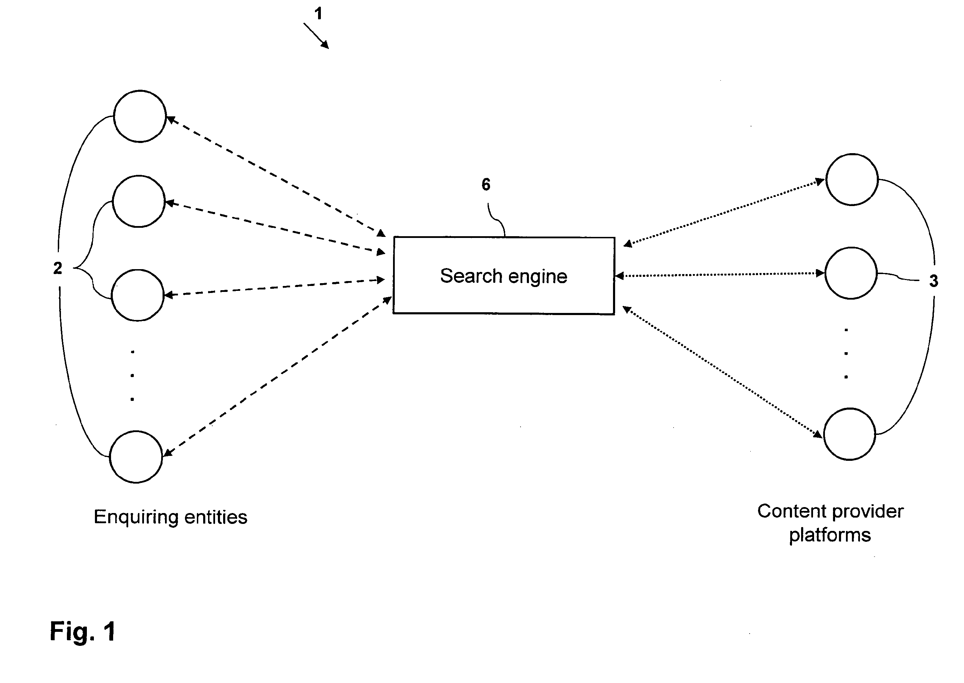

Distributed information processing systems are employed for various commercial applications such as distributed database systems, search machines, e-commerce platforms, travel portals, comparison shopping platforms and the like. Figure 1 depicts the high-level architecture of a distributed search machine system. The distributed search system 1 generally includes of enquiring entities 2, a search engine 6 and content provider platforms 3. In the example of a search machine, the enquiring entities 2 are e.g. client computers which direct search queries to the search engine 6. The search engine 6 processes the queries and collects the respective answers from the content provider platforms 3, i.e. web servers throughout the Internet in the search machine example. The search engine 6 returns responses to the enquiring entities 2.

Such distributed information processing systems often utilize caches. Caches are generally employed to store responses to be returned to the enquirer in order to accelerate the query process. For example, with respect to search machines, crawling the Internet in a synchronous manner in response to particular search queries would be far too slow. Thus, the enquirer receives responses from the cache which has been filled with response data beforehand, i.e. asynchronously to the occurrence of particular queries. As a downside of this cache-based approach, the responses returned to the enquirers may not reflect the current data of the content provider platforms. If the content provider platforms' data has changed between the last cache update, the response returned to the enquirer may be outdated.

Examples of such cache-based systems are given e.g. by US 2006/0149713 A1, US 2009/0234682 A1 and US 2004/0249799 A1.

US 2006/0149713 A1 focuses on improving the accuracy of cache-based searches. It proposes a two-stage processing mechanism. At the first stage, a cache database is searched in response to a search request from a user and cache-based results offering options to the user are returned. At the second stage, it is determined which of the options returned by the first-stage search is likely to be selected by the user. Another database containing at least some data that is more current than the cached data is looked up in order to determine the accuracy of the option that has been determined to be likely to be selected.

Another cache-related system is disclosed by US 2009/0234682 A1. A response to a query is generally generated by using cached data. If, however, it is determined that the response stored in the cache is stale, the query is actually forwarded to the original content source and the response is generated by using the current data from the original content source. Furthermore, this reference deals with cache-management strategies in order to increase the correctness, completeness and up-to-dateness of the cached data.

A similar cache-based system is described by US 2004/0249799 A1.

### SUMMARY OF THE INVENTION

The present invention is defined by the independent claims.

According to one aspect, the present invention provides a method of handling information queries in a distributed information processing environment. The distributed information processing environment includes enquiring entities, a plurality of content provider platforms and a query processing server. The query processing server has a cache storing query response data received in response to information queries from the content provider platforms. The method includes the following activities:
- The query processing server receives an information query and directs it to one of the content provider platforms.
- If the content provider platform responds to the information query within a given time limit, the query processing server forwards the response to an enquiring entity that was responsible for the information query and updates respective information query response data in the cache.
- If, on the other hand, the content provider platform does not respond to the information query within the given time limit, the query processing server forwards a cache-based response to the enquiring entity. Additionally, if the content provider platform still responds at a later point of time after the given time limit has exceeded, the query processing server updates the respective information query response data in the cache according to the later response of the content provider platform.

According to another aspect, the present invention provides a query processing server which is arranged to perform these activities.

Further aspects are defined by the dependent claims.

### BRIEF DESCRIPTION OF THE FIGURES

The present invention will be described with reference to the accompanying figures. Similar reference numbers generally indicate identical or functionally similar elements.
Figure 1 schematically shows a classic distributed information processing system without a query processing server.
Figure 2 illustrates an exemplary message flow within the system of Figure 1.
Figure 3 shows a message flow illustrating the operation of the query processing server.
Figure 4 schematically shows a distributed information processing system featuring a query processing server.
Figure 5 illustrates an exemplary message flow within the system of Figure 4.
Figure 6 is a flow diagram regarding the operation of a query processing server.
Figure 7 depicts an exemplary sequence of a particular information query, its storing in a cache and updating the corresponding accuracy metric data.
Figure 8 gives an example for an accuracy table of a particular cached information query response.
Figures 9, 10 and 11 present various message flow scenarios showing the respective behaviour of the query processing server.
Figure 12 is an exemplary schematic view of the internal architecture of the query processing server.

### DETAILED DESCRIPTION OF THE FIGURES

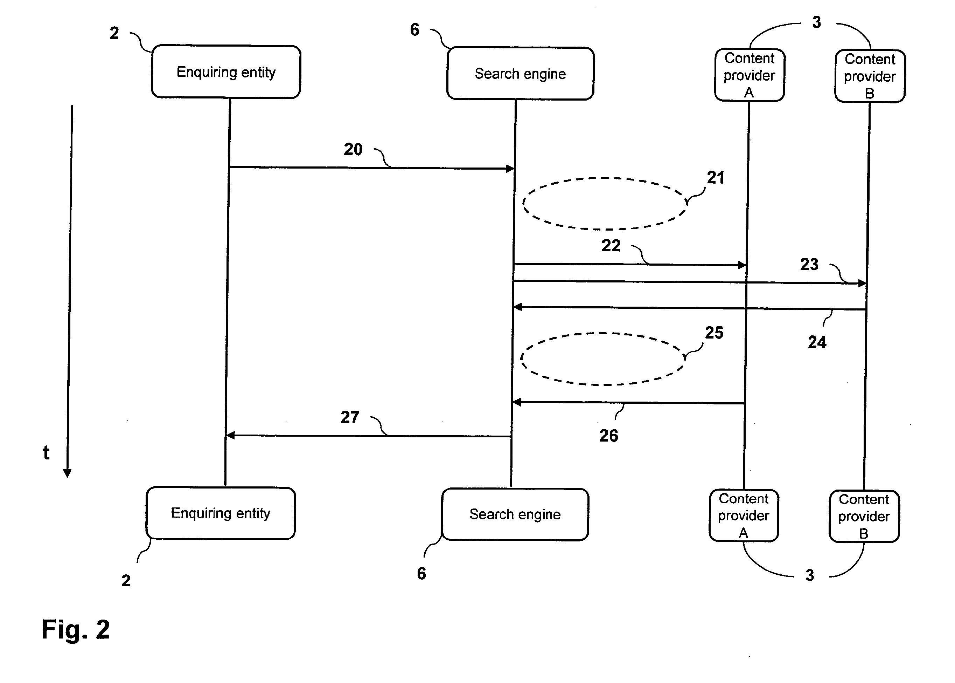

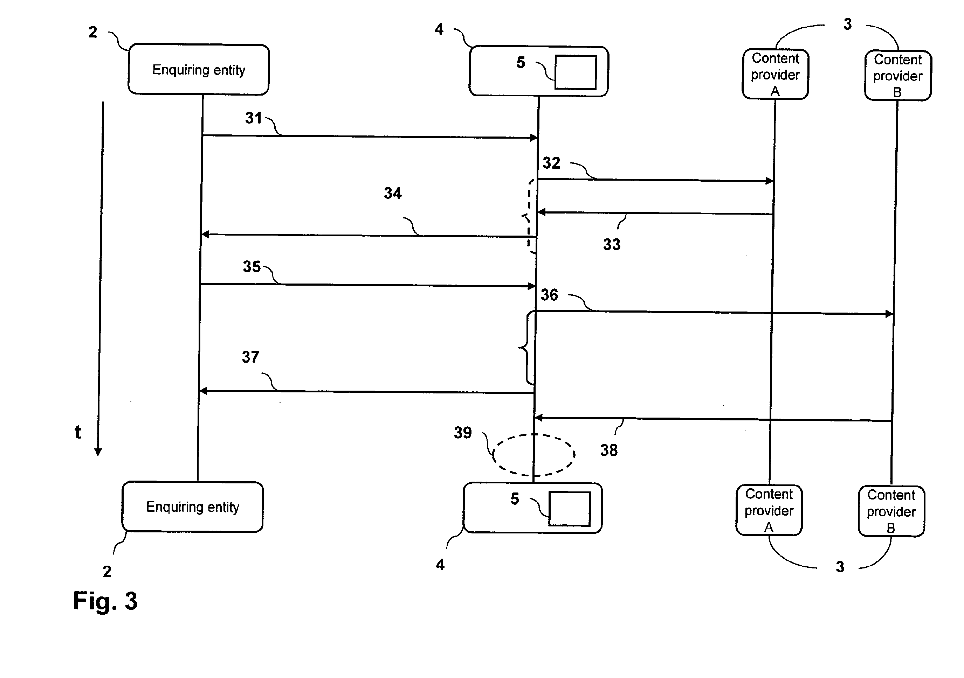

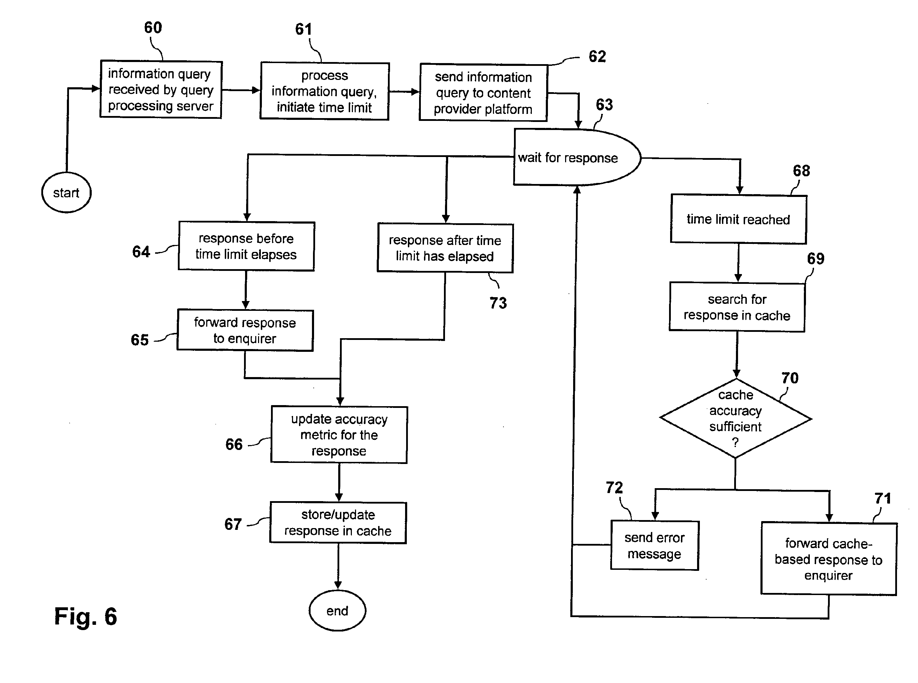

Before turning to a general description with reference to Figures 3 to 5 and the more detailed description with reference to Figures 6 to 12, some further background aspects will be set forth first on the basis of Figure 2.

As outlined at the outset, the present invention generally relates to a distributed information processing system such as a search machine environment shown by Figure 1. An exemplary message flow occurring in a classical distributed information processing system without utilization of a cache is shown by Figure 2 (which, like Figure 1, relates to the example of a search machine). First, an enquiring entity 2 such as a client computer issues an information request 20 to search engine 6. The search engine 6 processes this request at 21 and possibly splits it up into two information queries, each of them to be directed to a different content provider platform 3. In view of this distributional activity, search engine 6 is more generally referred to as distribution unit 6 in the context of the present invention and the subsequent examples.

Query 22 is sent to content provider platform A, whereas query 23 is transmitted to content provider platform B. The search engine 6 then has to wait for the feed-back from the content provider platforms 3 in order to generate the overall response to the enquiring entity 2. In the example of Figure 2, content provider platform B responds instantaneously with response 24. However, search engine 6 also requires a response from content provider platform A to answer request 20. Hence, it waits for this response at 25. The response 26 from content provider platform A then finally arrives at some later point of time. Search engine 6 generates combined response 27 from the two messages 24 and 26 and forwards it to the enquiring entity 2.

As illustrated by this simple example, the time between the enquiring entity's request 20 and the response 27 strongly depends on the responsiveness of the content provider platforms 3. In systems where search engine 6 needs responses from all content provider platforms 3 in order to generate combined response 27, the waiting time for enquiring entity 2 is determined by the slowest content provider platform 3. The content provider platforms' responsiveness may depend on various factors such as their hardware and software configuration, their current load, the amount of processing needed to answer the query etc., all of which may vary among the content provider platforms 3 at the time of arrival of a particular query from search engine 6. From the perspective of the enquiring entity 2, the time duration until reception of response 27 is unpredictable and intransparent. There is no guarantee whether and when a response to its request will arrive.

It is one object of the present invention to deal with these issues and to provide predictable and selectable timing requirement for enquiring entities for responses to their requests. This object is achieved by the provision of a query processing server including a particular utilization of a cache, as it will be described in detail below.

As set out above as well, caches introduce a certain amount of incorrectness or inaccuracy as their content does not necessarily correspond to the actual content of the content provider platforms. Hence, in addition to timing requirements regarding the responses to the enquiring entities, a further optional aspect presented herein concerns accuracy requirements which may be desired by enquiring entities in addition to response time requirements.

In the following, some general aspects will first be described with reference to Figures 3 to 5.

The object of providing predictable timing conditions for responses to queries caused by enquiring entities is achieved by an additional functional element herein referred to as query processing server 4. The query processing server 4 is arranged to accept information queries originating from the enquiring entities 2 and to transmit them to the respective content provider platform 3. The information queries processed by the query processing server 4 may be queries of all sorts such as search queries or database queries. In the following, the term information query is meant to be a request for information which is processed by the query processing server 4 and directed to a single content provider platform 3. More complex requests for information which potentially (but not necessarily) require responses from more than one content provider platform are referred to as information requests hereinafter.

In order to ensure a predictable response in terms of time (and optionally, as explained further below, also in terms of accuracy) to the enquiring entity 2, the query processing server 4 maintains a cache 5. The cache 5 is used as a source for an auxiliary response to the enquiring entity 2 in the case the content provider platform 3 does not respond in due course. The cache 5 includes query response data that the query processing server 4 e.g. received previously from the content provider platforms 3 in response to earlier information queries. The cache 5 may be implemented by means of a database such as a relational database using a relational database management system (RDBMS). For example, for each particular information query that was previously processed by the query processing server 4, a particular data structure such as a data record may be present in the cache 5. For example, each data record stores the respective query response data included in the latest response to the particular information query received from the content provider platform 3.

In order to provide reliable timing conditions, the query processing server 4 operates as follows:

In the course of relaying an information query to a content provider platform 3, the query processing server 4 sets and monitors a time limit for the response to this particular information query. For example, the query processing server 4 initiates a timer when forwarding the query to the content provider platform 3. The duration of the time limit e.g. depends on the enquiring entity 2 which is responsible for the particular information query and which awaits the answer to it. Thus, the time limit may vary from enquiring entity to enquiring entity.

The further operation of the query processing server 4 depends on whether or not the content provider platform 3 responds within the monitored time limit. If the content provider platform 3 responds within the time limit, the query processing server 4 forwards the response further to the enquiring entity 2. Additionally, the query processing server 4 updates the cache 5 in view of the received and forwarded response. The timer tracking the time limit is stopped.

If, however, the content provider platform 3 is slower than the time limit, i.e. the query processing server 4 does not receive a response from the content provider platform 3 within the given time limit, it utilizes the cache 5 to generate a response replacing the provider response failing to appear. Hence, when the time limit is over, e.g. when the timer has elapsed, the query processing server 4 looks up the cache 5 for query response data corresponding to the particular information query and, in the case the cache 5 includes query response data for that particular information query (and, optionally, the available query response data is accurate enough, as will be explained further below), generates and forwards a response to the enquiring entity 2 on the basis of the cache 5. Such response generated by utilizing query response data in the cache 5 is referred to as a cached-based response hereinafter.

It is possible that the query processing server 4 still receives a response from the content provider 3 at a later point of time, after the time limit has already exceeded and a cache-based response has already been generated and relayed to the enquiring entity 3. In this situation, the late-arrived response from the content provider platform 3 is still useful. It is used by the query processing server 4 to update the cache 5.

This general operation of the query processing server 5 is visualized by the example of Figure 3:

First, an information query 31 arrives at query processing server 4 and is forwarded to content provider platform A with message 32. Query processing server 4 keeps track of the time limit required by the enquiring entity 2 (indicated by the dashed curly bracket). The response 33 by content provider platform A is received within the time limit (still within the dashed curly bracket). Hence, the query processing server 4 forwards this response further to the enquiring entity 2 with message 34 and updates the cache with the response received from content provider platform A.

Another information query 35 arrives at query processing server 4. Again, it is forwarded to the respective content provider platform 3, this time to content provider platform B, with message 36. The time limit is monitored accordingly (indicated by the continuous curly bracket). However, content provider B fails to respond within the time requirements of enquiring entity 2; the query processing server 4 does not receive a response within the time limit (no response within the time indicated by the continuous curly bracket). At this point, query processing server 4 utilizes the cache 5 and generates a cache-based response 37 instead of the missing response from the content provider platform B. The cache-based response 37 is forwarded to the enquiring entity 2 thereby ensuring its response time requirements. Afterwards, the query processing server 4 still receives the outstanding response 38 from content provider platform B. This response cannot be utilized for responding to the enquiring entity 2 as this response has already been sent as the cache-based response 37. Rather, response 38 is used to update the cache 5 (indicated by dashed oval 39).

Thus, the present system 1 and query processing server 4 operates generally different than the known cache-based systems mentioned at the outset. In these state-of-the-art system as described e.g. by US 2006/0149713 A1, US 2009/0234682 A1 and US 2004/0249799 A1, a cache is utilized as the primary source of response data in order to minimize the response time. The cache is filled beforehand and responses to enquiries are generally taken from the cache. Only as an auxiliary measure, e.g. in the case the cache does not have the necessary information of the cached information is out of date, the original source of information is queried. This is in contrast to the approach presented herein according to which the content provider platforms 3 as original sources of information are used as the primary source, i.e. the query processing server 4 directs each information query to the respective content provider platform 3. The cache 5 is used only as an auxiliary pool of information in the case the content provider platform 3 does not respond in due time, i.e. a response from the content provider platform 3 is still outstanding when the time limit elapses.

The query processing server 4 may be a separate hardware and/or software platform such as a personal computer or a server rack-mounted in a computer rack. Depending on the load to be handled by the query processing server 4 and the performance needed, it may also be formed by a plurality of hosts such as a local area network including several interconnected computer hosts or a server farm. Alternatively, the query processing server 4 may be integrated with other functional components of the distributed information processing environment such as the optional distribution unit 6.

The enquiring entities 2 may be any computer hosts or information terminals of any kind, for example personal computers, mobile stations equipped with IEEE 802.11 and/or 2G/3G/4G interfaces, tablet PCs, laptops, either used in private or business environments, or public information terminals such as ticket machines, check-in machines, cash machines etc.

Content provider platforms 3 may be computer systems offering information services such as databases, web-hosts in the Internet or within an intranet, B2B platforms and other servers of all kinds.

Optionally, information processing environment 1 includes a distribution unit 6 which is - logically and in terms of information flow - located between the enquiring entities 2 and the query processing server 4. The distribution unit 4 enables the enquiring entities 2 to transmit information requests (as opposed to information queries), i.e. potentially more complex requests possibly requiring responses from more than one content provider platform 3. An information request requiring responses from only a single content provider platform 3 is referred to as a single-provider request. An information request requiring responses from more than one content provider platform 3 is referred to as a multi-provider request. An information request from an enquiring entity 2 is received by the distribution unit 6 which analyzes and converts the information request into an information query (if it is a single-provider request) or, in the case of a multi-provider request, decomposes the information request into a plurality of information queries. The conversion or decomposition may include a determination of the correct content provider platform 3 to which the resulting information query is to be directed. In this option, an identifier of the respective content provider platform 3 is included in each information query so that the query processing server 4 is able to route the information queries on the basis of this identifier to the correct content provider platform 3.

On the other hand, the distribution unit 6 receives the responses to the information queries from the query processing server 4, namely both, the responses received from the content provider platforms 3 as well as the cache-based responses generated by the query processing server 4 in the event of absent responses from the content provider platforms 3. The distribution unit 6 analyzes the responses to the information queries. A response relating to a single-provider request is converted back by the distribution unit 6 to an information request response and/or forwarded to the enquiring entity from which the information request came. Responses relating to a multi-provider request either are re-assembled to an integrated answer to the information request or, alternatively, forwarded as separate responses back to the enquiring entity 2. The re-assembling is particularly supported by the present system and the operation of the query processing server 4 because the query processing server 4, in most cases, provides for standardized response times. Hence, the distribution unit 4 generally receives (provider or cache-based) responses relating to a particular multi-provider request within a predictable amount of time, depending on the time limit employed by the query processing server 4. Hence, the distribution unit 6 is easily able to re-compose the responses relating to a multi-provider request as they all arrive at a well-defined period of time.

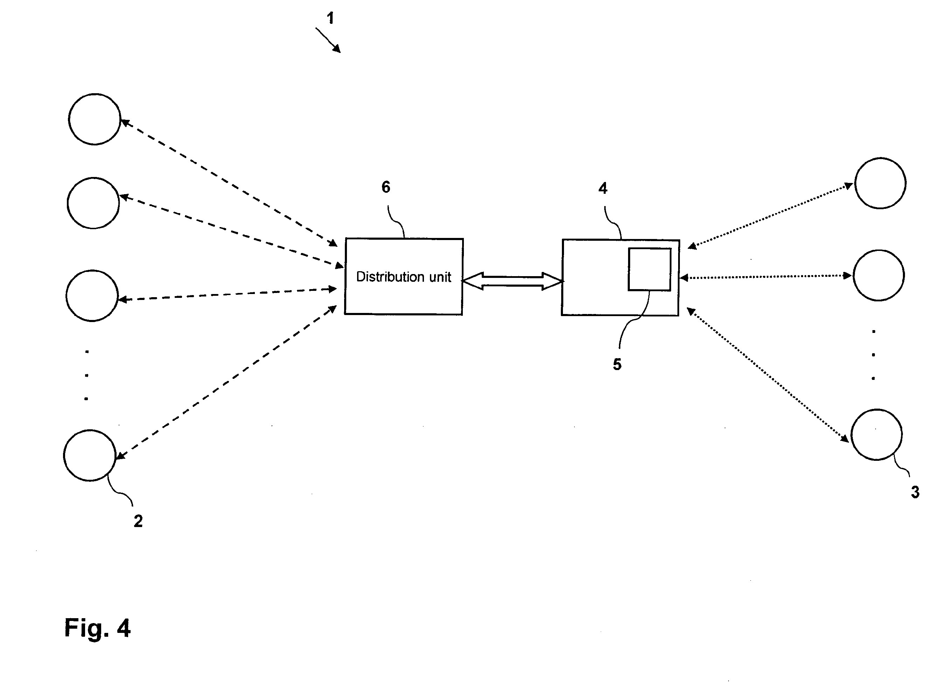

Figure 4 gives an overview of the resulting system 1 including the query processing server 4 and the optional distribution unit 6 connecting the enquiring entities 2 with the content provider platforms 3. Any number of enquiring entities 2 may be present. In particular systems 1, only one enquiring entity 2 may exist, while other systems 1 include a plurality of enquiring entities 2 up to a greater number such as a couple of tens, hundreds or even thousands or more. The same applies to the number of content provider platforms 3. The system 1 includes at least two content provider platforms 3 because it is the function of the distribution unit 6 and the query processing server 4 to provide a uniform service of the plurality of content provider platforms 3 to the enquiring entities 2. However, the number of content provider platforms 3 may be greater than two. Some system will include a relatively small number of content provider platforms 3 such as three, four or five. Other systems include a substantially greater number of content provider platforms 3, e.g. several tens, hundreds, thousands or even more.

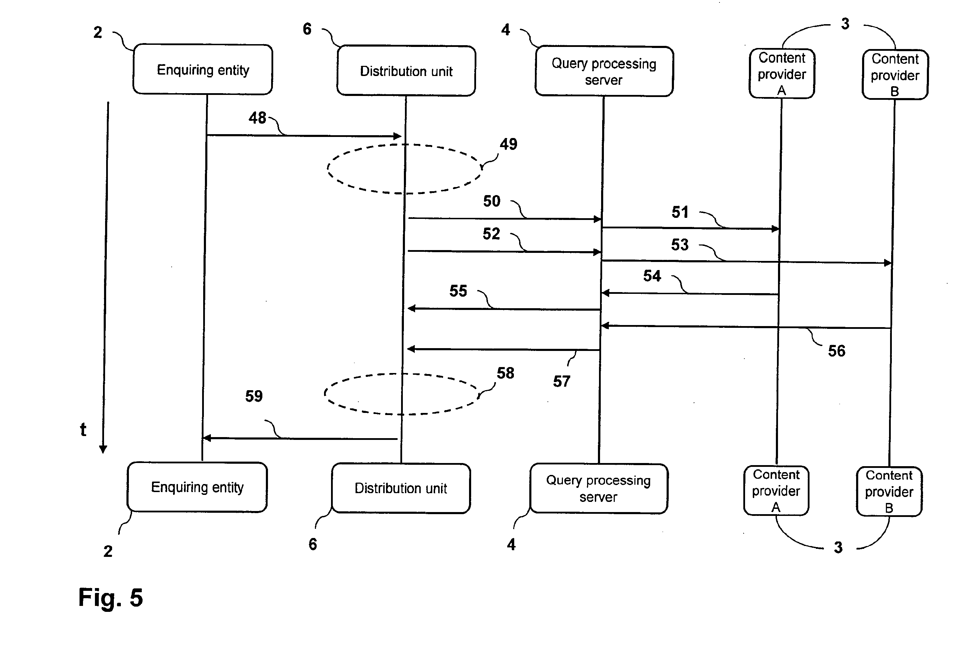

Figure 5 visualizes a multi-provider information request that is processed by the distribution unit 6. The distribution unit 5 receives a multi-provider information request 48 from enquiring entity 2. It then analyzes the request and splits it up (indicated by dashed oval 49) into two information queries 50, 52. Both information queries 50, 52 are sent to the query processing server 4 which further relays them to the correct content provider platforms 3. Information query 50 is relayed to content provider platform A with message 51 and information query 52 is directed to content provider platform B with message 53. Then, the query processing server 4 first receives the response 54 from content provider platform A and - after updating the cache 5 - routes it further to the distribution unit 6 with message 55. Next, the query processing server 4 receives response 56 from content provider platform 3 and similarly forwards it to distribution unit 6 with message 57. The distribution unit 6 now has both responses to the information queries 50, 52 available. It re-composes them and forms a unitary response to the enquiring entity's information request 48 (indicated by dashed oval 58). The response it then returned to the enquiring entity 3 by message 59.

Optionally, the query processing server 4 maintains an accuracy metric for each query response data held in the cache 5. The accuracy metric gives an indication of the probability that the cached response data corresponds to the response that would have been received from the content provider platform 3. The accuracy metric may be stored in the same database as the cached query response data.

Optionally, the query processing server 4 only generates and forwards a cache-based response if the cached query response data fulfils a given accuracy requirement. For example, after a time-out for a response from the content provider platform 3, the query processing server 4 looks up the response data stored in the cache 5 relating to the information query in question and determines the corresponding accuracy metric for that cached query response data. If the value of the accuracy metric is at or above a given threshold value, a cache-based response is generated and relayed to the distribution unit 6 and/or enquiring entity 2. By this, a certain level of accuracy is ensured.

If, however, the value of the query response data does not meet the given accuracy threshold, a cache-based response is not generated. In this case, the query processing server 4 optionally generates an error message indicating to the distribution unit 6 and/or enquiring entity 3 that it was unable to retrieve a response to the information query within the desired time and accuracy constraints.

In an optional implementation, the accuracy threshold is set according to accuracy requirements of the enquiring entity which was responsible for a particular information query. Thus, the information processing environment 1 allows the enquiring entities 3 to pre-set their respective accuracy requirements, e.g. a particular accuracy threshold which is considered by the query processing server 4 when trying to generate a cache-based response. There are several possibilities to implement such pre-setting of the accuracy threshold.

In one option, the enquiring entity 2 includes its accuracy setting into its information requests/information queries. The distribution unit 6 includes the settings into the information queries when converting/decomposing the information requests and/or the query processing server 4 reads out these settings from the information queries it receives and acts accordingly (i.e. generates a cache-based response only in the case the accuracy threshold is met). This solution is flexible as it allows the enquiring entities 2 to dynamically vary their accuracy requirements from information request to information request.

In another option, the enquiring entities' accuracy requirements are stored in the system, e.g. in the query processing server's 4 database or an external database accessible by the query processing server 4, and the information requests/information queries only contain an identification of the originating enquiring entity 2. The query processing server 4 looks up the enquiring entity's accuracy requirements in the database and acts accordingly when trying to generate a cache-based response. This solution is more static (although the enquiring entities can be provided with an interface to automatically change their accuracy settings held within the system), but eliminates the requirement to include the accuracy values in the information requests/information queries.

A mixture of both options is possible as well. For example, the query processing server 4 has access to permanently stored accuracy thresholds of the enquiring entities 2, but the enquiring entities 2 nevertheless can choose to include accuracy threshold values in their information requests/information queries which overwrite the values kept in the system for that particular information request/information query. Hence, if such overwriting functionality is implemented by the query processing server 4, it will use the accuracy threshold included in the information request/information query for processing this particular information request/information query as opposed to the accuracy values maintained in the database.

Optionally, the accuracy metrics of the cached query response data define the accuracy of each query response data set stored in the cache 5 over time. According to one alternative, this is realized by defining time intervals and providing an accuracy value for each time interval. Hence, for each query response data, the accuracy metric is built by a set of tuples of time interval tₓ and associated accuracy value aₓ. For example, if four time intervals are defined, a structure like {t₀: a₀, t₁: a₁, t₂: a₂, t₃: a₃} results, for each information query' query response data stored in the cache 5. This accuracy structure is, for example, implemented by data records which are, for example, held in the query processing server's 4 database.

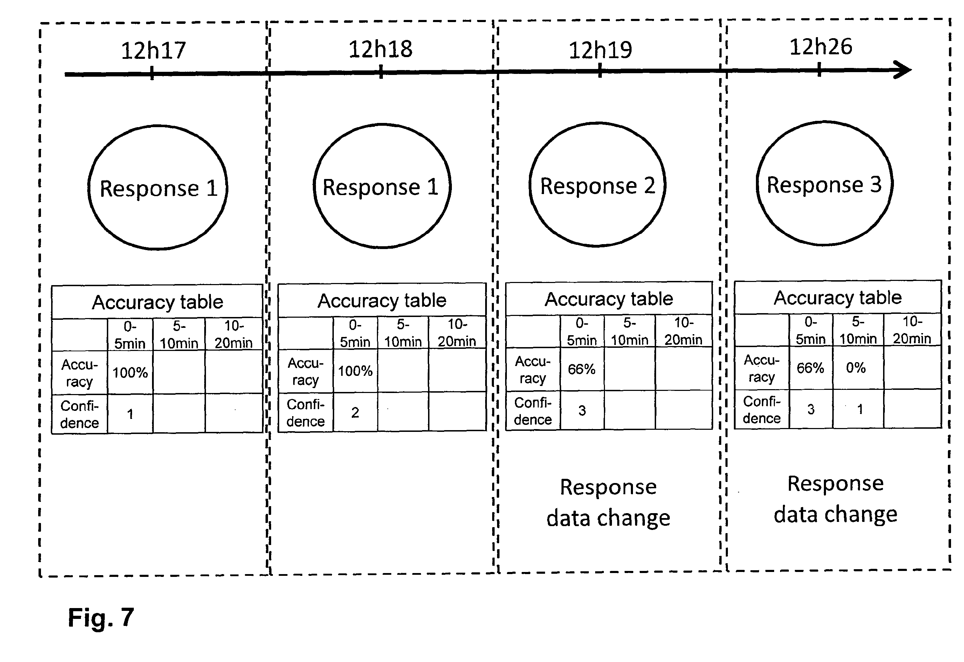

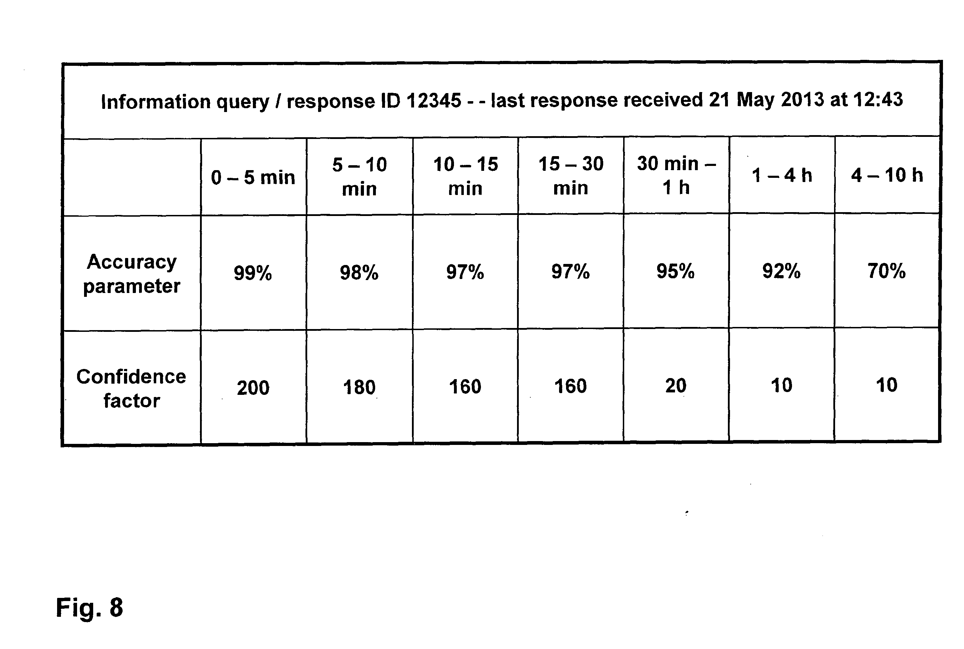

Optionally, the time-interval-related accuracy metric is based on time intervals which are relative time intervals defining time periods in the past prior to the time at which a particular information query is received by the query processing server 4. Relative time intervals means that the time intervals do not relate to absolute points of time (such as 1 to 2 p.m., 2 to 3 p.m. etc.), but to the point of time at which processing server 4 receives the information query (i.e. such as last 5 minutes, 5 to 10 minutes in the past and so on). Examples will subsequently be described with reference to Figures 7 and 8.

Such relative time intervals effectively give an indication about the volatility of query responses or, more generally, content provider platform data. Relative time intervals are utilized as follows by the query processing server 4: When the query processing server 4 receives a particular information query, it checks in which relative time interval this information query falls. This check is performed by determining the time passed since the last change of the query response data stored in the cache 5 for that particular information query, i.e. by comparing the (absolute) time at which the current response data to that information query was stored in the cache 5 and the (absolute) time of the information query reception. For example, if the cached response data for that information query was most recently changed six minutes ago, the current information query falls into an (exemplary) time interval "5 to 10 minutes". The accuracy value for this time interval indicates how reliable the currently cached response data is. If the respective data of the content provider platform 3 only changes, for example, once an hour on average, there is a good chance that the current cached response data stored six minutes ago is still accurate (i.e. corresponds to the data in the content provider platform 3) and the accuracy value will be rather high. If, however, the data of the content provider platform 3 changes more often, e.g. every minute, the cached response data stored six minutes ago will probably be outdated and the respective accuracy value for the 5 to 10 minutes time interval will be rather low.

Optionally, as already outlined above, the query processing server's 4 generation of a cache-based query response in the case of a time limit excess includes a determination whether or not the accuracy metric of the cached response data meets the given accuracy threshold. If the accuracy metric is based on relative time intervals as described before, this determination includes the determination of the relevant time interval (time since the last change of response data or, in other words, the last cache update for the cached response data), the determination of the respective accuracy value for that time interval and a comparison of the time interval's accuracy value with the accuracy threshold of the enquiring entity 2.

In an optional implementation, the accuracy value for each time intervals (be they absolute time intervals or, as described before, relative time intervals) is composed of two single values: an accuracy parameter and a confidence factor. The accuracy parameter is the actual indicator of the accuracy of the time interval. It is, for example, specified as a percentage value. For example, an accuracy value of 99% referring to a 0 to 5 minutes relative time interval indicates that the cached response data for the particular information query correctly reflects the content provider platform's 3 respective data in 99 of 100 cases within the first five minutes after a cache update. The confidence factor gives an indication of how reliable the accuracy value for the time interval is. For example, the confidence factor indicates how many cache updates have been previously conducted in that time interval. For example, a confidence factor of 200 for the aforementioned accuracy value (99% in the 0 to 5 minutes time interval) indicates that 200 samples have been taken in that time interval meaning that 200 responses have been received from the content provider platform 3 within five minutes after the cached response data has been changed (the accuracy value of 99% then means that from these 200 received responses within the five-minute interval, only four responses did not correspond to the cached response data and the cache had to be updated in that regard).

As outlined above, the query processing server 4 generates and forwards an error message if the cached-based response does not fulfil the accuracy requirements of the enquiring entity 2. In the optional implementation of the accuracy metrics including the two single values, accuracy parameter and confidence factor, the enquiring entity's accuracy requirements stipulate a threshold for both values, accuracy parameter and confidence factor. Thus, the accuracy requirements are considered to be met if both values are at or above the thresholds given by the enquiring entity (as outlined above, either being included in the information request/information query and/or held in a database accessible by the query processing server 4). Hence, a cache-based response is only generated and forwarded by the query processing server 4 if the accuracy value (for the specific time interval, if applicable) and the confidence factor (for the specific time interval, if applicable) are sufficient. Otherwise, if either the accuracy value or the confidence factor (and, all the more, if both) is below the given threshold value, the query processing server 4 generates an error message and forwards it to the distribution unit 6 and the enquiring entity 2, respectively.

In all the various optional implementations involving an accuracy metric (be it on the basis of absolute or relative time intervals and/or using accuracy parameters and confidence factors or another implementation), the query processing server's cache updating activity does not only involve checking and potentially updating the cached query response data, but also updating the cached query response data's accuracy metric. Thus, for every query response received from a content provider platform 3, the query processing server checks whether the cached query response data still equals the data in the received response and updates the accuracy metric (e.g. the accuracy parameter) accordingly. If the accuracy metric is based on time intervals, the accuracy metric data relating to the particular time interval of the information query is updated.

As outlined above, the duration of the time limit which determines when the query processing server generates a cache-based response may depend on the enquiring entity 2 which is responsible for the particular information query. Similar to the accuracy metric, the enquiring entities 2 optionally include their respective time limit in their information requests/information queries. The query processing server 4 reads out this information from the information query and initiates the time limit timer accordingly. Alternatively or additionally, the enquiring entities time limits are deposited in a database accessible by the query processing server 4 and the information requests/information queries include an identification of the enquiring entity 2.

In an optional implementation, updating of the query response information in the cache 5 when receiving a query response from the content provider platform 3 includes two kinds of activities:

On the one hand, the cached query response data itself may need to be updated. This is the case if either the cache 5 has not yet included the query response data for the particular information query at all or the cached query response data is outdated, i.e. the response from the content provider platform 3 has delivered different response data than kept in the cache 5 so far. In the former case, the query response data is added to the cache 5 for the first time. In the latter case, the cached query response data is changed in accordance with the response received from the content provider platform 3.

If none of these two situations (no query response data in the cache 5 or cached query response data is outdated) is present after a query response is received from the content provider platform 3, i.e. the query response data stored in the cache 5 corresponds to the data contained in the content provider platform's response, updating the information query response data in the cache is just checking whether or not an addition or amendment of the cache 5 is necessary.

On the other hand, the query processing server 4 also stores the point of time when it received the query response data from the content provider platform 3, at least when query response data is added to or amended in the cache 5. Storing the time of the response reception is at least done in implementations using relative time intervals because - as explained above - managing the accuracy metrics and the determination whether or not a cache-based response fulfils the enquiring entity's accuracy requirements includes a determination of the elapsed time since the response data has been stored in the cache 5.

Now turning to the more detailed description on the basis of Figures 6 to 12, Figure 6 shows an exemplary processing flow of activities performed by the query processing server 5 when processing information queries and responses from the content provider platforms 3.

The processing query server 4 receives an information query at 60, either from one of the enquiring entities 2 or via the distribution unit 6. The processing query server 4 processes the information query at 61, in particular it initiates a timer for receiving a response to it in accordance with time requirements of the enquiring entity 2. It routes the information query to the respective content provider platform 3 at 62. Then, the processing query server 4 waits for a response to the information query from the content provider platform 3 during 63.

The next activities of query processing server 4 are triggered by one of the following three events: the response from the content provider platform 3 is received before the time limit elapses (left branch in Figure 6), the time limit is reached (right branch in Figure 6), the query processing server 4 receives the response from the content provider platform 3 only after the time limit has elapsed (middle branch in Figure 6).

If the content provider platform's response arrives within the time limit at 64, the query processing server 4 forwards the response further to the enquiring entity 2 at 65, possibly via distribution unit 6. In addition, it locally processes the response by stopping the timer, updating the response's accuracy metric for the cache 5 at 66 and, if the cache 5 does not at all contain response data for the response or only outdated response data, stores and updates the response data reflecting the query response received from the content provider platform 3 in the cache 5 at 67. In an alternative implementation, the order of activities 65, 66 and 67 is different than indicated by Figure 6. For example, the response is first processed locally by performing activities 66 and 67 and the response is only forwarded afterwards at 65.

If the content provider platform's response does not arrive at query processing server 4 within the time limit, the timer elapses at some point of time at 68. It is then the duty of query processing server to try to generate a cache-based response in order to cope with the time requirements of the enquiring entity 2. Hence, the query processing server 4 searches for response data relating to the information query in the cache 5 at 69. If such response data cannot be found, e.g. because the cache 5 does not yet contain such response data (which could happen e.g. if that particular information query has not been received and processed by the query processing server 4 or if the content provider platform 3 has never responded to that particular information query in time before), an error message is generated and forwarded to the enquiring entity 2, possibly via distribution unit 6. If, however, the cache 5 contains response data relating to the particular information query, the accuracy requirements of the enquiring entity 2 are checked at 70. If the cached response data fulfils the given accuracy requirements, e.g. the accuracy threshold set by the enquiring entity 2 is met by the accuracy parameter and confidence level of the cached response data, the query processing server 4 generates a cache-based response including the cached response data and forwards the cache-based response to the enquiring entity 2, possibly via distribution unit 4, at 71. Otherwise, i.e. if the accuracy requirements are not met by the cached response data, e.g. its accuracy parameter and/or confidence level are below the threshold given by the enquiring entity, the query processing server 4 generates and forwards an error message at 72.

If the content information provider's response to the information query arrives at the query processing server 4 after the time limit has elapsed at 73, the response is not forwarded to the enquiring entity 2 because either this has already been done by forwarding a cache-based response at 71 or, if a cache-based response could not been generated, an error message has been forwarded at 72. Rather, the response from the content provider platform 3 is processed locally in order to update the cache 5. To this end, the corresponding response data's accuracy metric and the response data itself are updated at 66 and 67, respectively, as already explained above.

Being equipped with this functionality, the query processing server 4 is able to guarantee the enquiring entities' needs in term of response time and accuracy. If a content provider platform 3 is faster than the enquiring entity's time limit, the response provided by the content provider platform 3 is sent back to the enquiring entity. This response is of 100% accuracy as it in any case reflects the data current held by the content provider platform 3. It is also returned within the time limit. Thus, both, time and accuracy requirements are met. If, however, the content provider platform 3 is too slow and does not respond within the time limit, the query processing server 4 provides a cache-based response matching the enquiring entity's accuracy level and within the time limit defined by the enquiring entity 2. The content provider platform's response arriving at a later point of time is used to update the cache 5 and the accuracy metrics relating to the response. Thus, the query processing server's operation returns the most current response data within the given time limit. This is particularly advantageous for multi-provider information requests which can be answered by a mixture of cache-based responses (if respective content-provider platforms 3 respond only after the time limit elapses) and current responses from the content provider platforms 3 (if they respond within the time limit).

An example of an accuracy metrics is given with reference of Figure 7 which relates to one particular information query and respective responses received by the query processing server 4 from the content provider platform 3. As explained in detail above, the query processing server stores response data reflecting the responses received from the content provider platform 3 in the cache 5. In the exemplary implementation shown by Figure 7, the cache 5 also includes an accuracy table for each response data relating to one information query. Figure 7 shows the build-up of the accuracy table for the response data regarding to an exemplary information response.

On the one hand, the columns of the exemplary accuracy table of Figure 7 define three relative time intervals which relate to the time passed since the reception of the response to the information query from the content provider platform 3. The first time interval ("0 - 5 min") relates to the last five minutes prior to the arrival of the response, the second one ("5 - 10 min") to the five minutes before the first time interval and the third one ("10 - 20 min") to a time period of ten minutes prior to the second time interval. Hence, the accuracy metric according to Figure 7 covers twenty minutes in the past of every response received from the content provider platform 3.

On the other hand, the accuracy metrics according to Figure 7 are composed of two single factors for each of which a line of the accuracy table is reserved: an accuracy value and a confidence factor. The accuracy value is an accumulated percentage of responses received within the respective time interval being equal to the cached response data. Hence, it is a probability that the response stored in the cache 5 is valid over a period of time since this response was stored in the cache 5 or received from the content provider platform 3 for the last time. The confidence factor states how many responses have been actually received from the content provider platform 3 within each time interval and, thus, gives a confidence indication on the accuracy value it is associated with.

The mechanism of these accuracy metrics becomes apparent by the flow of four responses shown by Figure 7. The time stamps indicated by the time bar on top of Figure 7 indicate the points of time at which the query processing server receives the responses from the content provider platform 3. Prior to each of these responses arriving from the content provider platform 3, the query processing server 4 received the (same) information query, processed (which included the initiation of a timer) and forwarded it to the content provider platform 3.

At 12:17, the query processing server receives the first response to the information query. The accuracy table has still been empty beforehand; the first entry is now made. Since this is the first response which is stored in the cache, it belongs to the "0 - 5 min" time interval, the accuracy parameter is initialized at 100% and the number of received responses (i.e. the confidence factor) is initialized to 1. In addition, the query processing server 4 also stores the time stamp 12:17 of the received response.

A further response is then received already one minute later, at 12:18. The relevant time period is determined by calculating the difference between the time stamp of the last response (12:17) and the time stamp of the current response (12:18). As one minute has been passed since the last response, the accuracy values for the "0 - 5 min" time period are to be updated. In order to do this, the response received from the content provider platform 3 is compared with the response data kept in the cache. They are still both identical (shown by "Response 1" in Figure 7 which indicates that the second response is equal to the first response). Thus, the accuracy parameter remains at 100%. The confidence factor is incremented to 2 as now two responses have been received in the time period of "0 - 5 min". The time stamp of the last response is updated as well, from 12:17 to 12:18.

Another minute later, at 12:19, the query processing server 4 receives the next response from the content provider platform 3. Again, it is a response falling into the first time period "0 - 5 min", as only one minute has passed since the last response came in. Hence, again, the numbers of first time period are to be updated. However, this time, the response data has changed which is indicated by "Response 2" and the note "Response data change" meaning that this response has returned different response data than the first two responses referred to as "Response 1". Therefore, the accuracy parameter of the first time period is updated to 66% because one of the three responses received differed from the response data stored in the cache 5. The confidence factor concerning the first time period is incremented to 3 as three responses relating to the "0 - 5 min" time period have now been received by the query processing server 4. In addition, the time stamp of the last response received from the content provider platform 3 is updated from 12:18 to 12:19. Of course, the query processing server 4 also updates the response data kept in the cache 5 to the data carried by "Response 2".

Finally, the query processing server 4 receives a further response at 12:26. It calculates the time differences to the last response received at 12:19 (equals to seven minutes) and consequently determines the second time interval "5 - 10 min" as to be updated. The response received is labelled "Response 3" indicating that the response data has changed once again with respect to the previous "Response 2". Therefore, the accuracy parameter of the second time period "5 - 10 min" is initialized to only 0% because zero responses in this time period have been received conforming with the response data stored in the cache 5. The confidence factor of the second time period "5 - 10 min" is initialized to 1 as this is the first response received in this time period. Again, the time-stamp of the last response received is updated from 12:19 to 12:26 and the response data stored in the cache 5 is updated reflecting the "Response 3".

Thus, the query processing server uses use the complete production traffic to compute and update the accuracy level per information query. The granularity of the accuracy, in particular the time periods, are implementation-specific and, for example, depend on the requirements of the enquiring entities and/or the data volatility of the content provider platforms 3. For example, if the data of a particular content provider platform 3 is generally stable over a period of two to three weeks, it would be sensible to define the time periods significantly longer than shown by the example of Figure 7, e.g. two weeks as the first time period, another week as the second time period and another two weeks as the third time period. Of course, the accuracy table may also define more than three time periods. The accuracy level for an information query is updated each time the query processing server 4 receives a response to this information query from the content provider platform 3.

In order to keep the accuracy metrics adaptable to substantial changes in response data volatility of content provider platforms 3, the accuracy tables may be re-initialized from time to time or, alternatively, they are purged of older values that may not significantly represent the content provider platform's response data volatility any longer. In order to be able to sort out older accuracy values from the accuracy table, a history file is kept which indicates the times and the accuracy of responses received from the content provider platforms 3.

In this manner described by the example of Figure 7, the query processing server 4 establishes statistics regarding the amount and volatility of the responses received from the content provider platforms 3 which is then leveraged for the generation of cache-based responses having a satisfying level of accuracy. This is now explained by the example of Figure 8.

Figure 8 shows another example of an accuracy table relating to cached response data for a particular information query. The table contains an identification of the information query it relates to. The identification may either take the form of an explicit identifier (such as 12345 as indicated by Figure 8) or a subset of (other) information query fields such as a search string. Furthermore, the cached response data relating to the information query may be stored in the same table or, if the cached response data is stored at another location/table/partition/database, the table may contain a link to the cached response data (while the cached response data also includes a link back to the accuracy table).

Compared to Figure 7, the accuracy table of Figure 8 includes further time periods "15 - 30 min", "30 min - 1 h", "1 - 4 h" and "4 - 10 h". The query processing server 4 has already received a substantial number of responses to the information query (namely 740 responses) which can be taken from the confidence factor numbers shown in Figure 8. In the first four time periods until 30 minutes after the last received response, between 160 and 200 responses have been received, respectively, from the content provider platform 3. For the last three time periods between 30 minutes and 10 hours, a considerably smaller number of responses was received by the query processing server 4, namely 10 and 20 responses, respectively. As can also be derived from the table of Figure 8, the accuracy of the cached response data for that particular information query is relatively high up to the penultimate time period "1 - 4 h", namely between 99% (in the first time period "0 - 5 min") and still 92% (in the "1 - 4 h" time period). In the last time period "4 - 10 h", the accuracy is considerably lower, namely only 70%. Hence, the accuracy table shown by Figure 8 defines the probability of the response data conforming to the actual response data at the content provider platform 3 as a step function over periods of time.

As outlined above, the accuracy metrics such as the specific example given by Figure 8 are utilized when the content provider platform 3 does not respond within the time limit stipulated by the enquiring entity platform 2. Any enquiring entity 2 provides the query processing server 4 with its accuracy requirements such as a threshold value for the accuracy parameter and/or a threshold value for the confidence factor.

For example, an enquiring entity 2 which sends an information query having the ID 12345 (to which the example of Figure 8 relates) to the query processing server 4 has - at some earlier point of time - deposited its accuracy requirements in the system, accessible to the query processing server 4. The enquiring entity's accuracy requirements may be global, i.e. the same for all information request or information queries and content provider platforms 3 or different for certain information requests, information queries or content provider platforms 3. Thus, for example, the query processing server 4 is connected to a database which includes a partition holding the enquiring entities' accuracy requirements. The information requests and information queries contain an identification of the enquiring entities 2. Alternatively, the enquiring entity 2 includes its accuracy requirements into its information request and information query, respectively.

Thus, in the present example, the enquiring entity directing the information query with the ID 12345 to the query processing server 4 has deposited an accuracy parameter threshold of 95% and a confidence factor threshold of 50 in the aforementioned database coupled to the query processing server 4. The query processing server 4 receiving the information query e.g. at 12:50 on 21 May 2013 initializes a timer to one minute in accordance with the time requirements of the enquiring entities (which are, for example, kept the aforementioned database coupled to the query processing server 4 as well) and forwards the information query to the respective content provider platform 3. After the timer has elapsed at 12:51, the query processing server 4 realizes that it does not have received a response so far. Thus, it tries to generate a cache based response. From the time passed since the last response received from the content provider platform 3 at 12:43 (as indicated by Figure 8), i.e. eight minutes, it determines the "5 - 10 min" time period as the one to which the information query relates. The query processing server 4 checks the accuracy metrics in the "5 - 10 min" time period and compares it with the threshold values set by the enquiring entity 2 which it retrieves from the database. It determines that both accuracy values for the information query 12345 are above the enquiring entity's thresholds (98% > 95% and 180 > 50), i.e. the enquiring entity's accuracy requirements are met, retrieves the response data relating to information query 12345 from the cache and generates and forwards, possibly via the distribution unit 6, the cache-based response.

The same enquiring then directs a further information query with ID 12345 to the query processing server 4 at 13:23 on 21 May 2013. Since the query processing server 4 has not received any late response to the enquiring entities' information query and no further information query with the ID 12345 in the meantime, the accuracy table according to Figure 8 is still unchanged; in particular, the time stamp of 12:43 of the last response received is still valid. Again, the query processing server 4 initializes the timer to one minute, forwards the information query to the content provider platform 3 and waits for a response. For some reason, the timer again elapses at 13:24 without the query processing server 4 having received a response from the content provider platform 3. Again, it therefore tries to generate a response on the basis of the response data for information query ID 12345 stored in the cache 5. The time passed since the last response received amounts to 41 minutes (13:24 minus 12:43). Thus, the query processing server looks into the accuracy data of time period "30 min - 1 h" and compares it with the threshold values given by the enquiring entity 2. It determines that although the accuracy parameter threshold of 95% is still just met, the confidence factor of only 20 responses received within the "30 min - 1 h" time period is below the threshold of 50. Hence, the query processing server 4 determines that the enquiring entity's accuracy requirements are not met and, instead of generating a cache-based response, it generates and forwards an error message. Alternatively, in other implementations, the query processing server 4 still generates a cache-based response if at least one of the two accuracy threshold values are met.

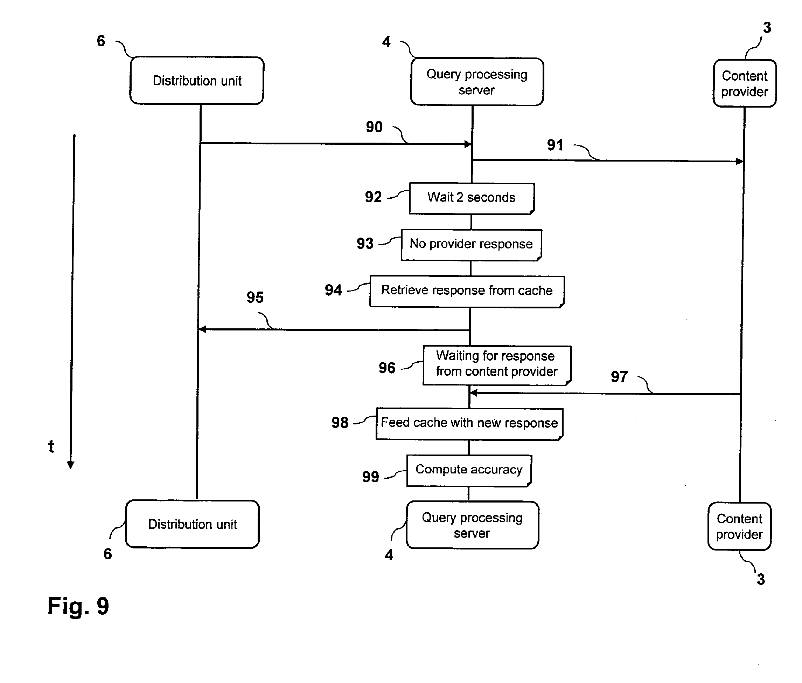

Figures 9 to 11 give further message sequence examples referring to different operation situations of the query processing server 4. For reasons of simplicity, the enquiring entities 2 are not shown by Figures 9 to 11. It is, however, assumed that an enquiring entity 2 transmits an information request or information query to the distribution unit 6 and the distribution unit 6 returns the response to the information request or information query back to the enquiring entity 2.

Figure 9 visualizes the query processing server's behaviour in the case of a slow content provider platform 3 in response to a single provider request. The query processing server 4 receives an information query 90 from the distribution unit 6 and relays it with message 91 to the respective content provider platform 3. The timer was initialized with the value of two seconds in accordance with the timing requirement of the enquiring entity being responsible for the information query 90. The query processing server 4 awaits the content provider platform's response at 92 for the two seconds. It then determines at 93 that no response has arrived and retrieves a response from the cache 5 at 94, optionally by using the accuracy mechanisms elaborated above. The cache-based response is forwarded to the distribution unit 6 with message 95 and further on to the enquiring entity 2. Then, after e.g. ten further seconds have passed during 96, the query processing server receives the content provider platform's response with message 97. This response 97 is used to update the cache 5. The response 97 is compared to the respective response data stored in the cache 5 and the latter one is updated in the case is it found to be out of date at 98. Optionally, the accuracy metrics are updated as well at 99 (e.g. accuracy parameter, confidence factor and time stamp of the response received, as elaborated above).

Thus, the query processing server 4 returns a timely response to the distribution unit 6 although the content provider platform does not respond in time. Furthermore, if the optional accuracy mechanisms are implemented, the accuracy requirements of the enquiring entity are met. The lately-arriving response from the content provider platform 3 is still used to keep the cache 5 up to date.

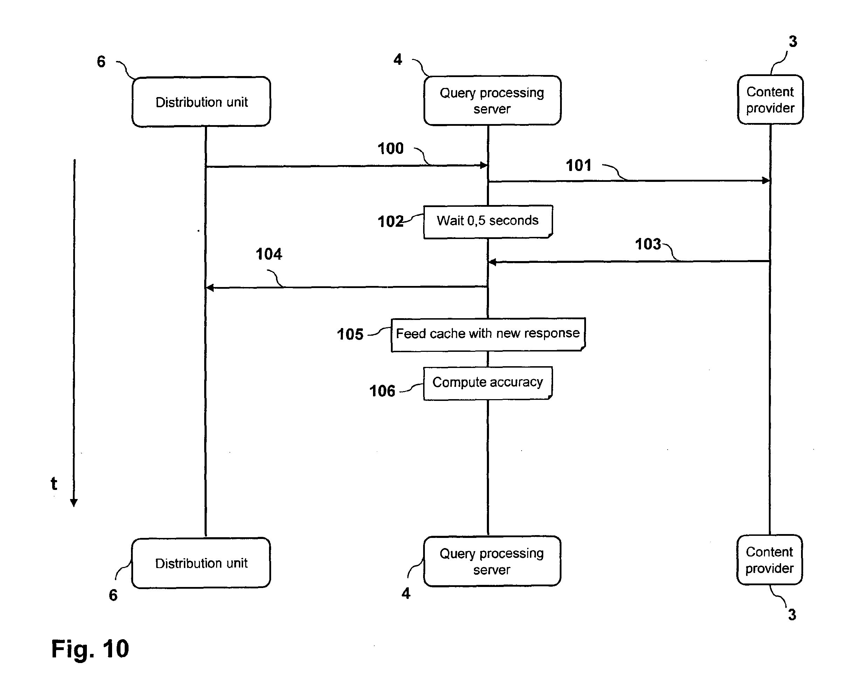

On the other hand, Figure 10 refers the query processing server's behaviour in the event of a timely response by the content provider platform 3 in response to a single-provider request. The query processing server 4 receives an information query 100, processes it (including timer initialization to e.g. three seconds) and forwards it to the respective content provider platform 3 with message 101. The content provider platform 3 already responds after 0,5 seconds have passed at 102 by message 103. The query processing server 4 forwards the response with message 104 to the distribution unit 6 and updates the cache 5 with the possibly changed response data conveyed by the response 103 at 105 and re-computes the response data's accuracy metrics at 106.

In this situation, the enquiring entity's response time requirements are met as well, this time by the timely response of the content provider platform 3. The accuracy of the response returned to the enquiring platform 2 is 100%, as the response actually originates from the content provider platform 3. On the other hand, the query processing server 4 still utilizes the content provider platform's response to keep the cache 5 up to date so that e.g. in the event the content provider platform 3 experiences outages, server instabilities, overloads etc. the query processing server 4 is able to generate a timely response being as accurate as possible from the cache 5.

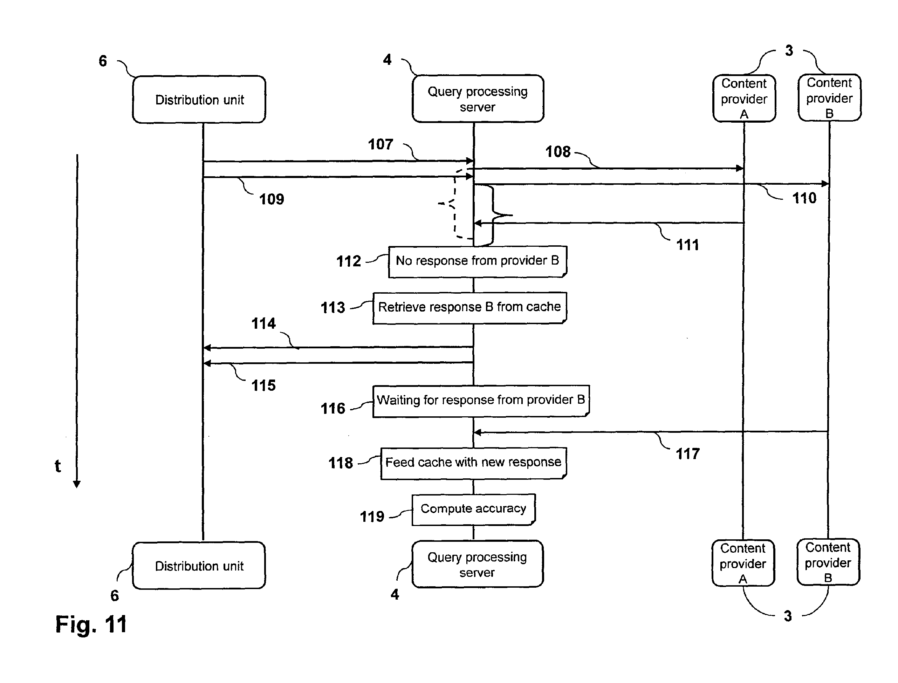

Figure 11 pertains to a multi-provider request and visualizes the query processing server's operation in a mixed situation of one timely and one delayed response from the content provider platforms 3.

The query processing server 4 receives two information queries 107, 109 from the distribution unit 6. Beforehand, the distribution unit 6 has received a multi-provider information request from one of the enquiring entities and has decomposed this information request into these two information queries 107, 109. In one implementation, the query processing server 4 handles these two information queries 107, 109 as separate information queries as it is unaware that the information queries 107, 109 belong to the same multi-provider information request. Hence, the query processing server 4 starts a timer (initialized to e.g. one second) monitoring the response to information query 107 in accordance with the enquiring entity's time requirements deposited in the system accessible to query processing server 4 or contained in the information request and the information query 107 and forwards the information query with message 108 to the content provider platform A. It similarly handles the information query 109, i.e. starts the timer (initialized to e.g. one second as well) and relays the information query with message 110 to content provider platform B.

The query processing server 4 then receives the response 111 to message 108 from content provider A still within the one-second time limit (which is indicated in Figure 11 by the dashed curly bracket). On the other hand, no response it received from content provider platform B within the one-second time limit observing a response to message 110 (this second time limit is indicated in Figure 11 by the continuous curly bracket). The query processing server 4 determines the absence of a response from content provider platform B at 112 and instead retrieves a response from the cache 5 at 113. Both, the response from content provider platform A and the cache-based response replacing the absent response from content provider platform B are forwarded to the distribution unit 6 with messages 114 and 115. Distribution unit 6 then re-composes the responses 114, 115 into a combined response to the original information request and returns this combined response to the enquiring entity 2. In an alternative implementation, the transmission of the content provider platform A's response in form of message 114 takes place immediately after the response 111 has reached the query processing server 4, i.e. before activity 112.

The query processing server 4 then still waits for the response from content provider platform B (of course, query processing server 4 might perform concurrent operations e.g. relating to other information queries during that waiting time) at 116. The response 117 then eventually arrives at the query processing server 4. The query processing server 4 updates the cache 5 in view of this response at 118, i.e. it checks whether an addition or change of the cached response data reflecting the information query response 117 in the cache is necessary and, if affirmative, performs the addition and change of the response data, respectively. At 119, it further re-computes the accuracy metric of the cached information query response data.

In this manner, the query processing server's 4 operation serves the enquiring entity's information request in form of the decomposed information queries 107, 109 in an optimized way. The timely response 111 from content provider platform A is returned within the enquiring entity's time requirements at an accuracy of 100%. The missing response from content provider platform B is replaced by a cached-based response which is also returned within the enquiring entity's time requirements at an accuracy level that is still acceptable for the enquiring entity 2. The overall recombined response to the information request can be formed by the distribution unit 6 within the enquiring entity's time expectations and returned to the enquiring entity 2. Thus, the lately arriving response 117 from content provider platform B does not defer the overall response to the enquiring entity's information request formed by the distribution unit 6.

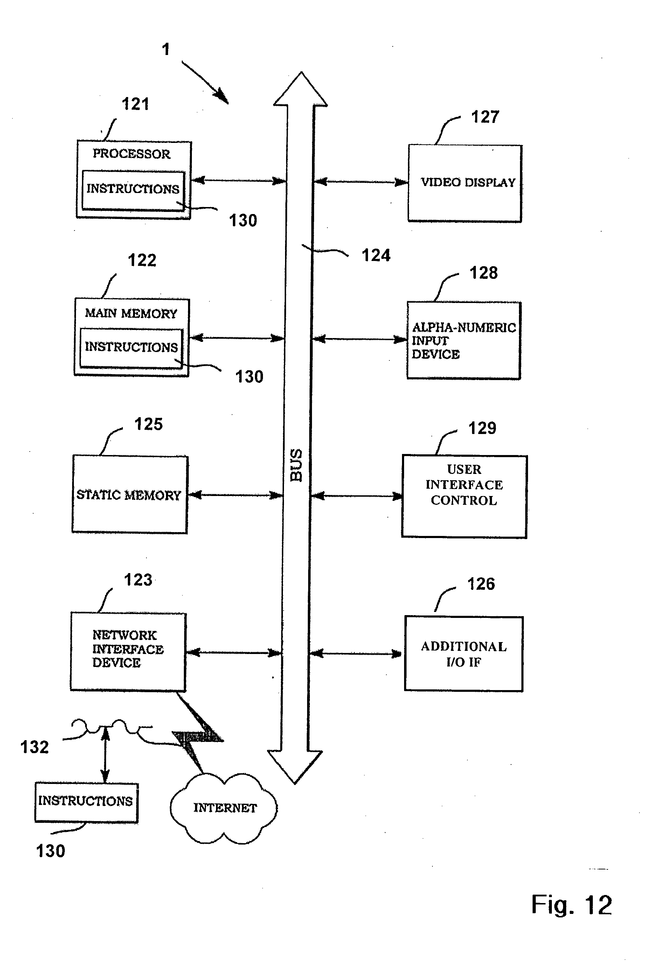

Finally, Figure 12 is a diagrammatic representation of the internal structure of query processing server 4. The query processing server 4 is arranged to execute a set of instructions, to cause it to perform any of the methodologies discussed herein. The mobile communication device includes a processor 121, a main memory 122 and a wireless network interface 123 (such as a Wi-Fi and/or Bluetooth interface) and/or a 2G/3G/4G mobile network interface device, all of which communicate with each other via a bus 124. It further includes a static memory 125, e.g. non-removable flash and/or solid state drive and/or a removable Micro or Mini SD card, which permanently stores the software enabling the query processing server 4 to execute its functions including timer initialization, generation of cache-based responses, cache and accuracy update, etc. and to communicate with the enquiring entities 2, the distribution unit 6 and the content provider platforms 4 and, optionally, to other local hosts within a local area network. Furthermore, it includes a display 127, a user interface control module 129 and an alpha-numeric and cursor input device 128. The wired and/or wireless network interface device 123 connects the query processing server 4 to enquiring entities 2 (via distribution unit 6, if present), the distribution unit 6 and the content provider platforms 4 and, optionally, to local hosts within a local area network. Optionally, additional I/O interfaces 126 such as card reader and USB interfaces may be present. An executable set of instructions (i.e. software) 130 embodying any one, or all, of the methodologies described above, resides completely, or at least partially, permanently in the non-volatile memory 125. When being executed, respective process data resides in the main memory 122 and/or the processor 121. The software 130 may further be transmitted or received as a propagated signal 132 through the wired or wireless network interface device 123 from/to a software server within the local area network or the Internet.

The other computer hosts mentioned herein such as the enquiring entities 2, the distribution unit 6 and the content provider platforms 3 are constructed in a similar way.

The methodologies described herein, in particular the query processing server 4 and its utilization of cache 5, can be applied for various purposes. As an example only, they can be implemented in a car rental system in which customers such as private or business users (e.g. airlines, hotels, or any sort of companies) or also web servers/websites (presenting advertisements of rental car providers on their websites) which place enquiries for rental cars. Hence, the enquiring entities 2 are formed by the computers of these customers. The distributed information processing environment further includes a distribution unit 6 and a query processing unit 4 which may be operated by a service provider offering unified car rental information and booking to the customers. The query processing server 4 and the distribution unit 6 operate according to the principles explained in detail above. The content provider platforms 3 correspond to rental car servers which are operated by rental car companies such as Hertz, Avis, Europcar, Alamo, Enterprise, Sixt etc. Their rental car offers are made available by the infrastructure of the server provider, i.e. the query processing server 4 and the distribution unit 6, to the customers. The customers can transmit their response time requirements and accuracy requirements to the service provider. In response to rental car queries received from the customers, the query processing server 4 relays them to the rental car servers and generates cache-based responses replacing actual responses from the rental car servers in the case of delayed responses to rental car queries.

Although certain products and methods constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

1. A method of handling information queries in a distributed information processing environment (1), the distributed information processing environment (1) comprising enquiring entities (2), a plurality of content provider platforms (3) and a query processing server (4) including a cache (5) storing query response data received in response to information queries from the content provider platforms (3), the method comprising:
- the query processing server (4) receiving an information query and directing the information query to one of the content provider platforms (3);
- if the content provider platform (3) responds to the information query within a given time limit, the query processing server (4) forwarding the response to an enquiring entity (2) which caused the information query and updating respective information query response data in the cache (5);
- if the content provider platform (3) does not respond to the information query within the given time limit, the query processing server (4) forwarding a cache-based response to the enquiring entity (2), and - in the case the content provider platform (3) still responds at a later point of time after the given time limit has been exceeded - the query processing server (4) updating the respective information query response data in the cache (5) according to the later response of the content provider platform (3).

2. The method of claim 1, wherein the distributed information processing environment (1) comprises a distribution unit (6) located between the enquiring entities (2) and the query processing server (4), the method further comprising:
- the distribution unit (6) receiving an information request from one of the enquiring entities (2), dividing the information request in at least one information query and transmitting the at least one information query to the query processing server (4);
- the distribution unit (6) receiving the response or responses to the at least one information query from the query processing server (4) and transmitting the response or responses to the enquiring entity (2).

3. The method of claim 1 or claim 2, wherein the query processing server (4) maintains an accuracy metric for each cached information query response data.

4. The method of claim 3, wherein the query processing server (4) only forwards the cache-based response to the enquiring entity (2) if the accuracy metric of the cached query response data relating to the received query meets a given accuracy threshold.

5. The method of claim 4, wherein the given accuracy threshold is set according to accuracy requirements provided in the information request sent by the enquiring entity (2).

6. The method of claim 4 or claim 5, wherein the query processing server (4) has access to an accuracy threshold table, the accuracy threshold table including accuracy requirements for the enquiring entities (2).

7. The method of claim 6, wherein the information request includes accuracy requirements of the enquiring entity (2) which overwrite the enquiring entity's accuracy requirements included in the accuracy threshold table for the information request.

8. The method of any one of claims 4 to 7, wherein the query processing server (4) forwards an error message to the enquiring entity (2) if the accuracy metric of the cached query response data does not meet the given accuracy threshold.

9. The method of any one of claims 3 to 8, wherein the accuracy metric for cached query response data relating to a particular query includes accuracy values relating to a plurality of time intervals, wherein a particular accuracy value relating to a particular time interval indicates a level of accuracy of the cached query response data for that particular time interval.

10. The method of claim 9, wherein the time intervals are relative time intervals defining periods in the past prior to the time at which the query was received by the query processing server.

11. The method of claim 9 or claim 10, wherein the query processing servers (4) checks whether the accuracy threshold is met, wherein the check comprises determining a particular time interval of the plurality of time intervals on the basis of the time of the last cache update relating to the information query and comparing the accuracy value of the determined time interval with the given accuracy threshold.

12. The method of any one of claims 9 to 11, wherein each accuracy value includes at least an accuracy parameter and a confidence factor, the confidence factor indicating a number of responses received from the content provider platform (3) for the particular query in the particular time interval.

13. The method of claim 12, wherein the query processing server (4) forwards an error message as opposed to a cache-based response if the confidence factor of the determined time interval is lower than a confidence threshold.

14. The method of any one of claims 3 to 13, wherein updating the query response data in the cache (5) comprises the query processing server (4) updating the information query response data's accuracy metric.

15. The method of any one of the previous claims, wherein the given time limit is set according to time limit requirements provided in the information request sent by the enquiring entity (2).

16. The method of any one of the previous claims, wherein the query processing server (4) has access to a time limit table, the time limit table including time limit indications for the enquiring entities (2).

17. The method of claim 15 or claim 16, wherein the information query includes an identity of the enquiring entity (2) and the method comprises the query processing server (4), upon receiving the information query, initiating the time limit in accordance with the time limit requirements of the enquiring entity (2) identified in the information query.

18. The method of any one of the previous claims, wherein updating the information query response data in the cache (5) comprises
adding to the cache (5) the time when the information query response data is received by the query processing server (4); and
either adding the information query response data to the cache (5) if the cache (5) has not yet included information query response data relating to the received information query or changing the information cached query response data according to the response received from the content provider platform (3) if the cached information query response data does not correspond to the response received from the content provider platform (3).

19. A query processing server (4) in a distributed information processing environment (1), the distributed information processing environment (1) further comprising enquiring entities (2) and a plurality of content provider platforms (3), the query processing server (4) including a cache (5) storing information query response data received in response to information queries from the content provider platforms (3), the query processing server (4) being arranged to:
- receive an information query and direct the information query to one of the content provider platforms (3);
- if the content provider platform (3) responds to the information query within a given time limit, forward the response to an enquiring entity (2) which caused the information query and updating respective information query response data in the cache (5);
- forward a cache-based response to the enquiring entity (2) if the content provider platform does not respond to the information query within the given time limit, and - in the case the content provider platform (3) still responds at a later point of time after the given time limit has been exceeded - update the respective information query response data in the cache (5) according to the later response of the content provider platform (3).

20. Non-transitory computer readable storage medium having computer program instructions stored therein, which when executed on a query processing server (4) in a distributed information processing environment (1), the distributed information processing environment (1) further comprising enquiring entities (2) and a plurality of content provider platforms (3), the query processing server including a cache (5) storing information query response data received in response to information queries from the content provider platforms (3), cause the query processing server (4) to:
- receive an information query and direct the information query to one of the content provider platforms (3);
- if the content provider platform (3) responds to the information query within a given time limit, forward the response to an enquiring entity (2) which caused the information query and updating respective information query response data in the cache (5);
- forward a cache-based response to the enquiring entity (2) if the content provider platform (4) does not respond to the information query within the given time limit, and - in the case the content provider platform (3) still responds at a later point of time after the given time limit has been exceeded - update the respective information query response data in the cache (5) according to the later response of the content provider platform (3).
